# DEMANDE DE BREVET EUROPEEN

(11) **EP 0 690 116 A1**
(43) Date de publication de la demande: **03.01.1996**
(21) Numéro de dépôt: 95401487.4
(22) Date de dépôt: 23.06.1995
(51) Int. Cl.: C09K 11/84, C01F 17/00

(54) **Oxysulfure de terre rare, son procédé de préparation et son utilisation comme luminophore**

(30) Priorité: 29.06.1994 FR 9407993
(71) Demandeur: RHONE-POULENC CHIMIE, F-92408 Courbevoie Cédex (FR)
(72) Inventeur: Danroc, Joel, F-38100 Grenoble (FR); Huguenin, Denis, F-92600 Asnières-sur-Seine (FR); Levy, François, F-38640 Claix (FR)
(74) Mandataire: Dubruc, Philippe

(57) **Abrégé**

L'invention concerne un oxysulfure de terre rare qui comprend à titre d'additif au moins une autre terre rare et qui est caractérisé en ce qu'il présente en surface un équilibre ou un déficit en oxygène.

Le procédé de préparation de l'oxysulfure de l'invention est caractérisé en ce qu'on calcine en présence d'hydrogène un oxysulfure de terre rare comprenant à titre d'additif au moins une autre terre rare.

L'invention couvre aussi une composition luminescente contenant un oxysulfure de terre rare du type précité.

## Description

La présente invention concerne un oxysulfure de terre rare, son procédé de préparation et son utilisation comme luminophore.

On sait dans le domaine de l'électronique que les tubes cathodiques fonctionnent en utilisant une énergie importante de l'ordre de 30000V. On souhaite par ailleurs dans ce type d'application utiliser des électrons à basse énergie, c'est à dire de l'ordre de 200 à 800V. C'est le cas des écrans avec effet de champ (FED : field emission display). Dans ce type de matériel, ce sont des micropointes métalliques qui émettent les électrons de basse énergie qui vont exciter un matériau luminophore placé sur l'écran.

Ce matériau luminophore doit présenter deux propriétés essentielles.

Il doit avoir tout d'abord des caractéristiques optiques suffisantes, il s'agit ici de ses propriétés de luminescence, il doit émettre d'une manière efficace dans la couleur recherchée.

L'autre propriété nécessaire est la conductivité électrique. Le matériau doit en effet pouvoir évacuer les charges lorsqu'il est utilisé dans l'application mentionnée ci-dessus.

Le problème réside dans la difficulté d'avoir un matériau réunissant ces deux propriétés à un niveau suffisant. En effet, I'efficacité lumineuse du matériau décroît avec le potentiel d'excitation. En outre, il existe un potentiel minimum d'excitation (Vamin) en deçà duquel le matériau ne présente plus de conductivité. Comme on cherche à utiliser une gamme de potentiel la plus basse possible, de l'ordre de 200 à 800V comme indiqué plus haut, on a donc besoin d'un matériau présentant un Vamin le plus bas possible tout en conservant une efficacité lumineuse suffisante.

Le problème qui se pose apparaît donc comme la recherche d'un matériau présentant conjointement une efficacité lumineuse et une conductivité suffisantes dans une gamme de tension correspondant à l'application recherchée (200 - 800V).

L'objet de l'invention est un produit présentant une telle caractéristique.

Dans ce but, l'oxysulfure de terre rare de l'invention qui comprend à titre d'additif au moins une autre terre rare, est caractérisé en ce qu'il présente en surface un équilibre ou un déficit en oxygène.

L'invention concerne aussi un procédé de préparation d'un oxysulfure de terre rare qui est caractérisé en ce qu'on calcine en présence d'hydrogène un oxysulfure de terre rare comprenant à titre d'additif au moins une autre terre rare.

L'invention couvre aussi une composition luminescente contenant un oxysulfure de terre rare du type précité.

Les produits de l'invention présentent ainsi un Vamin relativement faible tout en conservant une efficacité lumineuse suffisante pour être utilisés comme luminophores. Ils sont particulièrement bien adaptés à une utilisation en luminescence basse tension, utilisation dans laquelle ils sont soumis à un rayonnement d'électrons à basse énergie, c'est à dire de l'ordre d'environ au moins 200V et d'au plus environ 800V.

D'autres caractéristiques, détails et avantages de l'invention apparaîtront encore plus complètement à la lecture de la description qui va suivre ainsi que des dessins annexés dans lesquels :
- la figure 1 est un spectre d'analyse ESCA d'un produit selon l'invention;
- la figure 2 est un spectre d'analyse ESCA d'un produit selon l'art antérieur.

Le produit de l'invention est un oxysulfure de terre rare. Par terre rare on entend ici les éléments du groupe constitué par l'yttrium et les éléments de la classification périodique de numéro atomique compris inclusivement entre 57 et 71. La classification périodique des éléments à laquelle il est fait référence est celle publiée dans le Supplément au Bulletin de la Société Chimique de France n° 1 (janvier 1966).

L'oxysulfure de terre rare de l'invention peut répondre plus particulièrement à la formule Ln₂O₂S dans laquelle Ln désigne la terre rare.

La terre rare peut être choisie dans le groupe comprenant le lanthane, l'yttrium, le gadolinium et le lutécium.

Selon un mode de réalisation particulier de l'invention, la terre rare est le gadolinium.

On notera qu'indépendamment de la présence de l'additif qui sera décrit plus loin, le produit de l'invention peut comprendre plusieurs terres rares rentrant dans la composition de l'oxysulfure lui-même.

L'oxysulfure de terre rare de l'invention comprend en outre, à titre d'additif ou de dopant, au moins une autre terre rare. Cet additif ou dopant a pour objet de conférer une propriété de luminescence à l'oxysulfure. Cette autre terre rare est généralement différente de celle qui forme l'oxysulfure proprement dit. Cette terre rare sera choisie en fonction de la couleur d'émission que l'on souhaite pour le luminophore. Plus particulièrement, on pourra choisir cet additif ou dopant dans le groupe comprenant le terbium, le praséodyme, l'europium et le samarium. Le terbium et le praséodyme seront plus particulièrement choisis pour l'obtention de luminophores verts. Pour un luminophore rouge, l'additif sera l'europium ou le samarium. Il est tout à fait possible d'utiliser plusieurs additifs en combinaison comme par exemple le terbium avec le praséodyme ou l'europium avec le samarium.

Généralement, l'additif est présent en une teneur compnse entre 0,1 et 7% en mole et notamment entre 0,1 et 4%, ce rapport étant calculé en nombre de moles d'additif/nombre de moles d'additif+nombre de moles d'oxysulfure de terre rare Ln₂O₂S. Ce rapport peut être plus particulièrement compris entre 0,3 et 2%.

Une caractéristique principale de l'oxysulfure de l'invention réside dans sa structure. Il présente en effet un équilibre ou un déficit en oxygène à sa surface.

A titre illustratif et non limitatif et compte tenu d'autre part des techniques d'analyse utilisées, le terme surface concerne ici une épaisseur correspondant à environ 5 couches atomiques.

On entend par équilibre et déficit en oxygène, le fait que lorsqu'on mesure le rapport atomique O/S à la surface de l'oxysulfure, ce rapport est égal et inférieur respectivement au rapport stoechiométrique O/S de l'oxysulfure. Par exemple, pour un oxysulfure de formule Ln₂O₂S, le rapport stoechiométrique est de 2. Dans le cas du produit de l'invention, ce rapport est au plus égal à 2. Dans le cas des oxysulfures connus, ce rapport est supérieur à 2 par suite notamment d'une oxydation.

Selon un mode de réalisation préféré de l'invention, le rapport O/S est nettement inférieur à 2 et peut être égal à 0.

L'état de surface du produit de l'invention tel que décrit ci-dessus peut être mis en évidence par l'analyse ESCA (Electro Spectroscopy for Chemical Analysis). Cette technique permet en effet une analyse chimique de surface. La présence des pics sur les spectres révèle la nature des éléments en surface du produit analysé.

Cet état de surface peut aussi être mis en évidence par la mesure du potentiel zêta du produit et la détermination de son point isoélectrique. Les produits de l'art antérieur, c'est à dire les produits qui n'ont pas subi le traitement de l'invention présentent un pH du point isoélectrique donné alors que les produits de l'invention à composition identique mais après traitement présentent un pH du point isoélectrique différent généralement plus faible. A titre d'exemple le pH du point isoélectrique d'un oxysulfure de gadolinium dopé au terbium est égal à 10, alors que l'oxysulfure de gadolinium de même composition de l'invention présentent un pH du point isoélectrique plus faible.

Enfin, le produit se présente de préférence sous forme d'une poudre. Dans ce cas, la taille moyenne des particules de la poudre est comprise généralement entre 1 et 12µm.

Le procédé de préparation du produit de l'invention va maintenant être décrit.

Ce procédé consiste essentiellement à calciner un oxysulfure en présence d'hydrogène.

On utilise comme produit de départ un oxysulfure préparé par tout moyen connu, par exemple par chamottage.

Selon un mode de réalisation particulier de l'invention, au lieu d'utiliser de l'hydrogène pur, on met en oeuvre un gaz inerte hydrogéné. Dans ce cas, la nature du gaz inerte importe peu. On utilise habituellement l'argon.

La quantité d'hydrogène est fonction de la durée de la calcination et de la quantité d'oxysulfure à traiter et du taux de déficit en oxygène désiré pour le produit. Dans le cas de l'utilisation d'un gaz inerte hydrogéné, cette quantité d'hydrogène varie généralement entre 1 et 20% en volume.

Il est préférable d'effectuer lors de la calcination de l'oxysulfure, un balayage par l'hydrogène ou par le gaz inerte hydrogéné.

La température de calcination dépend du type de produit calciné. Toutefois, elle est habituellement comprise entre 900 et 1200°C de préférence entre 1000 et 1150°C. Une température trop basse peut nuire aux propriétés optiques du produit. Une température trop élevée peut entraîner une décomposition ou un frittage du produit.

La durée de la calcination est fonction aussi de la température et de la quantité d'oxysulfure à traiter et du taux de déficit en oxygène désiré pour le produit. Cette calcination se fait habituellement sur un palier qui peut varier de 1 à 2 heures.

Il est préférable d'utiliser un creuset en métal inerte comme par exemple le platine ce qui permet d'obtenir un produit de meilleure efficacité lumineuse et dont les grains s'agglomèrent moins.

L'invention concerne aussi les compositions luminescentes contenant un oxysulfure de terre rare du type décrit ci-dessus ou du type obtenu par le procédé qui vient d'être étudié.

Ces compositions et les oxysulfures de l'invention peuvent être utilisés comme luminophore en luminescence basse tension, notamment dans la fabrication de tout dispositif mettant en oeuvre cette luminescence basse tension, comme par exemple les écrans avec effet de champ.

Enfin, l'invention concerne aussi les dispositifs luminescents, du type écrans avec effet de champ par exemple, incorporant les compositions ou les oxysulfures décrits plus haut ou tels qu'obtenus par le procédé décrit ci-dessus. Dans ces dispositifs, les oxysulfures sont disposés sur les écrans soumis à l'excitation de basse énergie. Cette mise en oeuvre des luminophores dans la fabrication des dispositifs à luminescence basse tension se fait selon des techniques bien connus par exemple par dépôts sur les écrans par sérigraphie, sédimentation ou électrophorèse.

Des exemples vont maintenant être donnés.

Dans ces exemples, le potentiel zêta et la détermination du point isoélectrique sont obtenus de la manière suivante. On prépare une solution concentrée contenant 2g de produit dans 130ml de KNO₃ 0,01M. On agite pendant au moins 24 heures et on laisse décanter pendant au moins 24 heures. On prépare ensuite une suspension diluée en introduisant dans le surnageant recueilli après décantation quelques microlitres de produit prélevé à partir du culot. Trois mesures de mobilité, pH et conductivité sont faites et la moyenne des histogrammes est calculée. En fonction du signe de cette mobilité moyenne, on lance un titrage manuel par KOH ou HNO₃ pour chercher le point isoélectrique. Un temps d'attente de 5 minutes est observé entre l'ajout d'acide ou de base et les mesures de mobilité. Trois mesures sont faites à chaque pH et leur moyenne est calculée.

Enfin, en ce qui conceme les propriétés de luminescence des produits qui sont données dans les exemples, celles-ci sont mesurées par cathodoluminescence basse tension des produits déposés sans liant sur un substrat transparent, dans des conditions d'excitation de 1µA/mm en courant continu. L'épaisseur de la couche de produit sur le substrat est de 10µm.

### Exemple 1

On part d'un oxysulfure de gadolinium Gd₂O₂S dopé au terbium (1,5% en mole).

On le calcine à différentes températures dans un creuset en platine sous balayage d'argon à 10% d'hydrogène. On observe un palier de calcination de 2 heures.

Le produit calciné émet une luminescence verte. Les résultats sont donnés dans le tableau ci-dessous.

| Température de calcination °C | Efficacité lumineuse à 400V en Lm/W | Vamin |
|---|---|---|
| 1200 | 7 | 200V |
| 1100 | 7 | 250V |
| 900 | 5 | 250V |

Le pH du point isoélectrique du produit calciné à 1200°C est de 8,5.

A titre comparatif, le même produit non calciné a un pH du point isoélectrique de 10 et ne présente pas de luminescence mesurable dans la gamme de 200 à 800V.

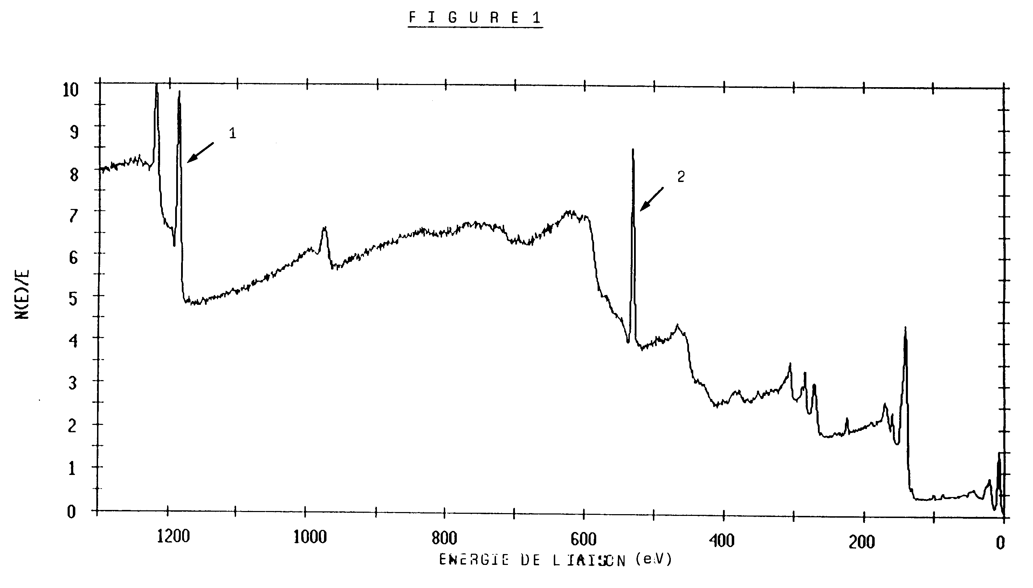

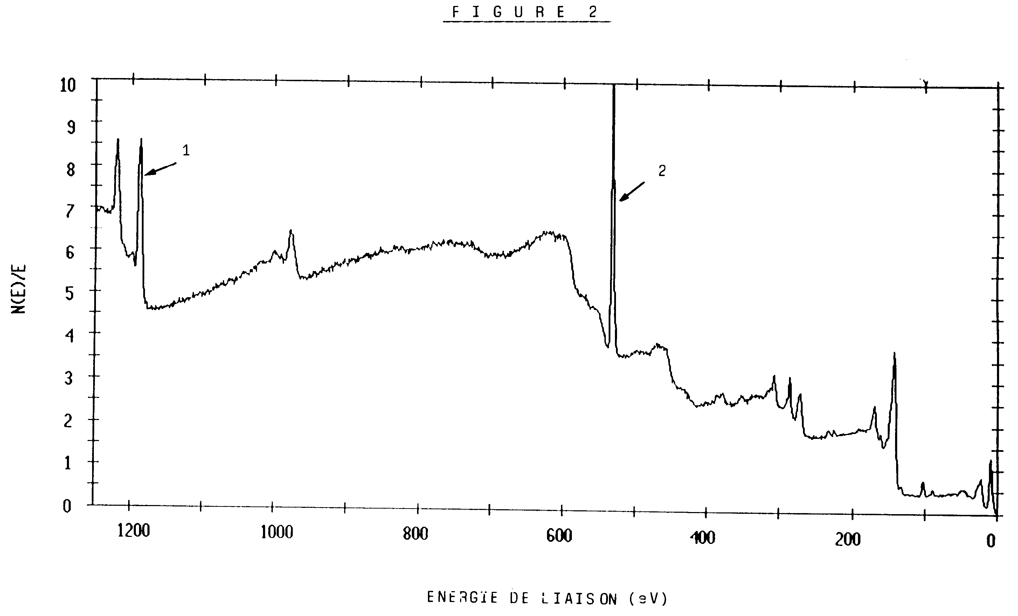

Les figures 1 et 2 permettent de mettre en évidence les différences entre le produit de l'invention et celui comparatif. Ces figures sont des spectres ESCA .Les axes des abscisses indiquent les énergies de liaison, les axes des ordonnés un nombre de coups. Les pics repérés par 1 vers 1200eV concement les électrons de la couche 3d du gadolinium et les pics repérés par 2 concernent les électrons de la couche 1s de l'oxygène. La comparaison des hauteurs des pics 2 respectifs entre les figures 1 et 2 montre bien une variation des proportions relatives entre l'oxygène et le gadolinium et plus particulièrement, dans le cadre de la figure 1, un déficit en oxygène.

### Exemple 2

On part d'un oxysulfure d'yttrium Y₂0₂S dopé à l'europium (3% en mole)

On le calcine à 1200°C dans un creuset en platine sous balayage d'argon à 10% d'hydrogène. On observe un palier de calcination de 2 heures.

Le produit émet une luminescence rouge. Il présente une efficacité lumineuse à 400V de 2,5 Lm/W et un Vamin de 250V. Le produit non calciné présente un Vamin de 400V et une efficacité lumineuse à 400V de 0,8Lm/W.

## Revendications

**1-** Oxysulfure de terre rare comprenant à titre d'additif au moins une autre terre rare, caractérisé en ce qu'il présente en surface un équilibre en oxygène.

**2-** Oxysulfure de terre rare comprenant à titre d'additif au moins une autre terre rare, caractérisé en ce qu'il présente en surface un déficit en oxygène.

**3-** Oxysulfure selon la revendication 1 ou 2, caractérisé en ce que la terre rare de l'oxysulfure est choisie dans le groupe comprenant le lanthane, l'yttrium, le gadolinium et le lutécium.

**4-** Oxysulfure selon l'une des revendications précédentes, caractérisé en ce que l'additif est choisi dans le groupe comprenant le terbium, le praséodyme, l'europium et le samarium.

**5-** Oxysulfure selon l'une des revendications précédentes, caractérisé en ce que l'additif est présent en une teneur comprise entre 0,1 et 7% en mole.

**6-** Procédé de préparation d'un oxysulfure de terre rare, caractérisé en ce qu'on calcine en présence d'hydrogène un oxysulfure de terre rare comprenant à titre d'additif au moins une autre terre rare.

**7-** Procédé selon la revendication 6, caractérisé en ce qu'on effectue la calcination en présence d'un gaz inerte hydrogéné, plus particulièrement un gaz dont la teneur en hydrogène est comprise entre 1 et 20% en volume.

**8-** Procédé selon l'une des revendications 6 ou 7, caractérisé en ce qu'on calcine en effectuant un balayage de l'hydrogène ou du gaz inerte hydrogéné sur l'oxysulfure de terre rare.

**9-** Composition luminescente, caractérisée en ce qu'elle contient un oxysulfure de terre rare selon l'une des revendications 1 à 5 ou préparé par le procédé selon l'une des revendications 6 à 8.

**10-** Utilisation comme luminophore en luminescence basse tension d'un oxysulfure de terre rare selon l'une des revendications 1 à 5 ou préparé par le procédé selon l'une des revendications 6 à 8 ou d'une composition selon la revendication 9.

**11-** Dispositif mettant en oeuvre une luminescence basse tension, notamment du type écran avec effet de champ, caractérisé en ce qu'il comprend un oxysulfure de terre rare selon l'une des revendications 1 à 5 ou préparé par le procédé selon l'une des revendications 6 à 8 ou une composition selon la revendication 9.
